# EUROPEAN PATENT APPLICATION

(11) **EP 1 300 261 A1**
(43) Date of publication of application: **09.04.2003**
(21) Application number: 02078471.6
(22) Date of filing: 22.08.2002
(51) Int. Cl.: B60B 7/14, B60B 7/06

(54) **Mounting clamp for hubcap**

(30) Priority: 04.10.2001 NL 1018622
(71) Applicant: Nooijen, Paul Johan Willem Maria, 5340 AG Oss (NL)
(72) Inventor: Nooijen, Paul Johan Willem Maria, 5340 AG Oss (NL)

(57) **Abstract**

The invention relates to a mounting clamp for a hubcap, with the characteristics that the mounting clamp engages on the outer diameter of a channel edge of a wheel rim. Mounting clamps (1), of which at least three have been mounted onto a hubcap, are tightened through the mounting bolds (13), as a result of which the hubcap (2) will be tensioned and the mounting clamp (1) will engage on the outer diameter of the outer channel edge (10),which will consequently guarantee a centering of the hubcap in relation to the wheel.

## Description

The invention relates to a mounting clamp for a (non-rotating) hubcap.

Such a mounting arrangement is known from patent US-4,889,394: "Mounting arrangement for positively fixing a wheel cover disk to the wheel rim of an industrial vehicle". Said mounting clamp is mounted onto the outer channel edge of the wheel rim.

A disadvantage of the known mounting arrangement is that it will not guarantee a good centering on the wheel.

It is the object of this invention to provide a mounting clamp that overcomes the stated disadvantage.

Said object will be realized through a mounting clamp for a hubcap with the characteristics that the mounting clamp engages the maximum diameter of the outer channel edge of the wheel rim.

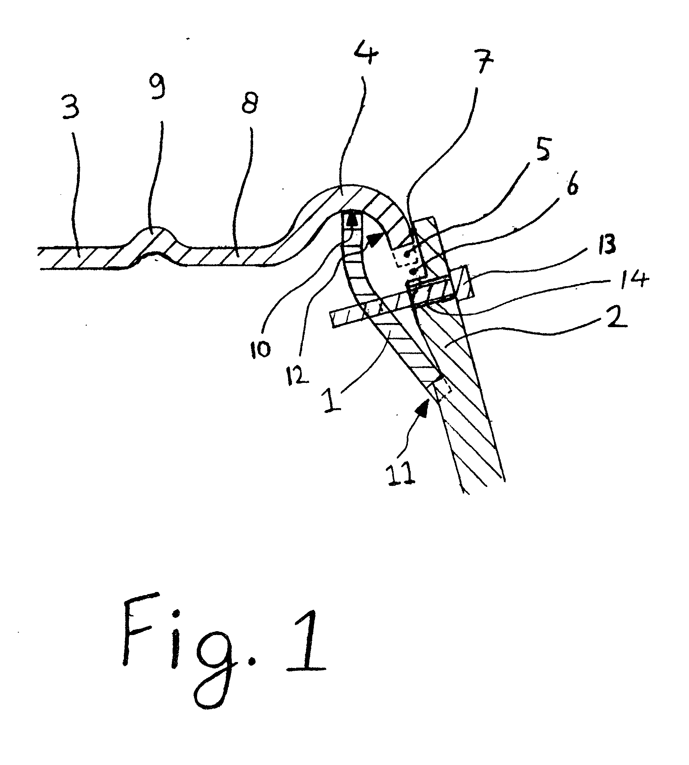

Other features and advantages of the said mounting clamp according to the invention will appear more clearly from the appended drawing wherein: FIG 1 shows a schematic cross section of a wheel rim 3 with a hubcap 2 and a mounting clamp 1 according the invention. On wheel rim 3, a tire will be mounted between channel edge 9 and channel edge 4 on 8 that will ensure that the tire remains in its fixed position. Said mounting clamp 1, of which at least three clamps are mounted onto one single hubcap, will be tightened by bold 13. As a result of the tightening, the hubcap 2 will be tensioned and consequently, mounting clamp 1 will move in the direction of the maximum diameter 10 of the outer channel edge of the wheel rim. This will guarantee a fixed and positive centering in relation to the wheel. While tightening bold 13, said bold 13 will want to make an angular displacement in relation to the hubcap 2. The necessary space for this displacement is created through a bore hole with a larger diameter 14 in the hubcap 2 than theoretically needed for the outer diameter of the bold 13. In stated patent US-4,889,394, the clamp engages more in direction 12, which will not guarantee a fixed and positive centering. By tightening said bold 13, the hubcap 2 will be forced to move in the direction 7 of the wheel rim. Channel edges of wheel rims show a certain amount of variation 5. In order to compensate for these variations, a tolerance 6 has been allowed for on the hubcap 2. Said mounting clamp 1 is fitted with two cams 11 with the purpose of preventing rotation of the mounting clamp 1 during tightening of the bold 13.

## Claims

1. The invention relates to a mounting clamp (1) for a (non-rotating) hubcap (2), **with the characteristics**, that said mounting clamp (1) engages on the maximum diameter (10) of the outer channel rim edge (4).

2. Mounting clamp (1) of claim 1, **with the characteristics**, that said mounting clamp (1) is constructed in such a way that the mounting clamp (1) will not rotate during tightening bold (13).

3. Mounting clamp (1) of claim 1, **with the characteristics**, that there are 5 said mounting clamps (1) on one hubcap (2).

4. Mounting clamp (1) of claim 1, **with the characteristics,** that said mounting clamp (1) and hubcap (2) are constructed in such a way that said bold (13) can rotate in relation to the hubcap (2).

5. Mounting clamp (1) of claim 1, **with the characteristics,** that said mounting clamp (1) and hubcap (2) are constructed in such a way that stated bold (13) can rotate in relation to the mounting clamp (1) of claim 1.

6. Mounting clamp (1) of claim 1, **with the characteristics**, that said mounting clamp (1) and hubcap (2) are constructed in such a way that stated bold (13) can rotate in relation to the hubcap (2) and mounting clamp (1).
